Europäisches Patentamt

European Patent Office

Office européen des brevets

(11) Veröffentlichungsnummer: **0 214 480 B1**

(12) **EUROPÄISCHE PATENTSCHRIFT**

(45) Veröffentlichungstag der Patentschrift: **18.03.92**

(51) Int. Cl.⁵: **G02B 6/44**

(21) Anmeldenummer: **86111000.5**

(22) Anmeldetag: **08.08.86**

(54) **Metallfreies selbsttragendes optisches Kabel für Hochspannungsfreileitungen.**

(30) Priorität: **12.08.85 DE 3528927**

(43) Veröffentlichungstag der Anmeldung:
**18.03.87 Patentblatt 87/12**

(45) Bekanntmachung des Hinweises auf die
Patenterteilung:
**18.03.92 Patentblatt 92/12**

(84) Benannte Vertragsstaaten:
**AT BE CH DE FR GB IT LI NL SE**

(56) Entgegenhaltungen:
**EP-A- 0 042 996       EP-A- 0 112 163**
**EP-A- 0 113 377       EP-A- 0 129 617**
**US-A- 3 935 042       US-A- 4 358 637**

**Patent Abstracts of Japan band 7, nr. 290**
**(p-245)(1435), 24 December 1983; & JP-**
**A-58162911.**

(73) Patentinhaber: **SIEMENS AKTIENGESELL-**
**SCHAFT**
**Wittelsbacherplatz 2**
**W-8000 München 2(DE)**

(72) Erfinder: **Oestreich, Ulrich, Dipl.-Ing.**
**Karl-Witthalm-Strasse 15**
**W-8000 München 70(DE)**

Rank Xerox (UK) Business Services

**Beschreibung**

Die Erfindung betrifft ein metallfreies, aus Kabelseele und Kabelmantel bestehendes selbsttragendes optisches Kabel, beispielsweise bekannt aus EP-A-0 042 996, für die Verwendung als Luftkabel im Feldbereich zwischen den Phasenseilen einer Hochspannungs-Freileitung.

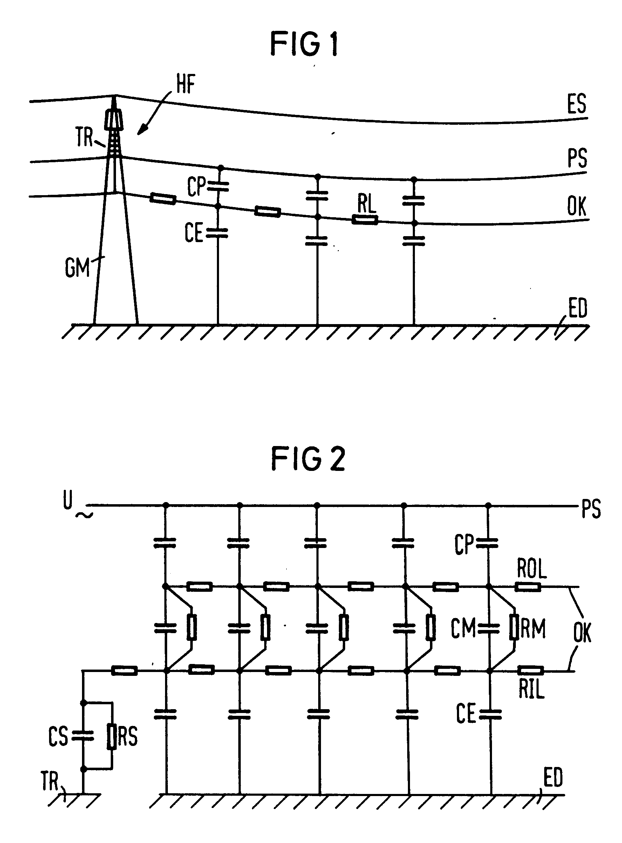

Optische Kabel werden vielfach im Bereich von Hochspannungs-Freileitungen verlegt, wobei zwei grundsätzlich unterschiedliche Anordnungen möglich sind. Bei der ersten Gestaltungsart sind die optischen Kabel in Phasen- oder Erdseile integriert oder an diesen angelascht. Bei der zweiten Ausführungsform werden die optischen Kabel als selbsttragende Strukturen aufgebaut und im Feldbereich, d.h. zwischen oder unter den Phasenseilen einer Hochspannungsleitung verlegt. Der grundsätzliche Aufbau und die sich dabei ergebenden kapazitiven Verkopplungen sind schematisch in Figur 1 dargestellt. Dort ist eine einphasige Hochspannungs-Freileitung HF gezeichnet, innerhalb deren Feldbereich ein metallfreies selbsttragendes optisches Kabel OK verlegt und an der Traverse TR eines Gittermastes GM gehalten ist. Das Erdseil ist mit ES bezeichnet und eines der Phasenseile mit PS. Da das optische Kabel OK aus Isoliermaterial besteht, kann die Manteloberfläche im Ersatzschaltbild durch eine Folge von Längswiderständen RL nachgebildet werden. Zwischen dem optischen Kabel OK und dem Erdseil ES sowie der Erde ED liegen Querkapazitäten, die mit CE bezeichnet sind, während die Ersatzkapazität zwischen dem optischen Kabel OK und dem Phasenseil PS die Bezeichnung CP tragen.

Das dargestellte Ersatzschaltbild gilt sinngemäß auch für eine mehrphasige Hochspannungsleitung, wobei sämtliche Phasenleiter zu einem Ersatz-Phasenleiter verschmelzen.

Es hat sich gezeigt, daß die Mäntel sogenannter "volldielektrischer Kabel" vor allem in Höchstspannungsnetzen (d.h. solchen = ≥ 110 kV) infolge der am Kabelmantel auftretenden Spannungen Beschädigungen oder Zerstörungen durch Teilentladungsvorgänge ausgesetzt sein können. Ausgehend von dem Ersatzschaltbild nach Fig. 1 läßt sich hierfür folgende Erklärung geben: Die durch Feuchtigkeit und Ablagerungen (Verschmutzung mit dem Oberflächenwiderstand RL) behaftete Kabeloberfläche nimmt im Gleichgewicht - d.h. genügend weit von geerdeten Mastbauteilen entfernt -eine von den wirksamen Teilkapazitäten CE und CP bestimmte Spannung an. Diese kann im ungünstigsten Fall bis zu 50 % der Phasenspannung betragen. Der zugehörige Ladestrom fließt partiell über den Oberflächenwiderstand RL Richtung Mast ab. Dabei ist aber zu berücksichtigen, daß an Unterbrechungsstellen des Feuchtefilms oder der Verschmutzung infolge der entstehenden Widerstandserhöhungen (Widerstands-Unstetigkeit) Überschläge und Kriechströme in solcher Größenordnung entstehen können, daß dort das Material des Außenmantels des optischen Kabels OK abgebaut wird.Es sind also alle Übergangszustände zwischen feuchter und trockener Oberfläche oder zwischen mehr oder weniger verschmutzter Oberfläche besonders kritisch.

Der vorliegenden Erfindung, welche sich auf ein metallfreies Kabel der eingangs genannten Art bezieht, liegt die Aufgabe zugrunde, einen Weg aufzuzeigen, wie die durch Kriechströme und Überschläge verursachte Beanspruchung der optischen Kabel vermieden oder verringert werden kann. Gemäß der Erfindung wird dies dadurch erreicht, daß die Kabelseele schwach elektrisch leitend ausgebildet ist, derart, daß deren spezifischer Widerstand zwischen $10^5$ Ω cm und $10^{10}$ Ω cm liegt.

Durch den Einbau der schwach leitenden Elemente im Bereich der Kabelseele werden die gefährlichen Widerstands-Unstetigkeiten ander Oberfläche der optischen Kabel weitgehend kapazitiv ohmisch überbrückt und damit Überschläge und Kriechströme soweit abgebaut oder vermieden, daß unerwünschter Materialabbau oder Materialzerstörung des optischen Kabels ebenfalls vermieden werden.

Die Erfindung und ihre Weiterbildungen werden nachfolgend anhand von Zeichnungen näher erläutert. Es zeigen:

Fig. 2     ein Ersatzschaltbild der erfindungsgemäßen Kabelkonstruktion,

Fig. 3     ein Kabel nach der Erfindung in Querschnittsdarstellung,

Fig. 4     die Abspannung am Mast und

Fig. 5     die Erdung der Kabelseele.

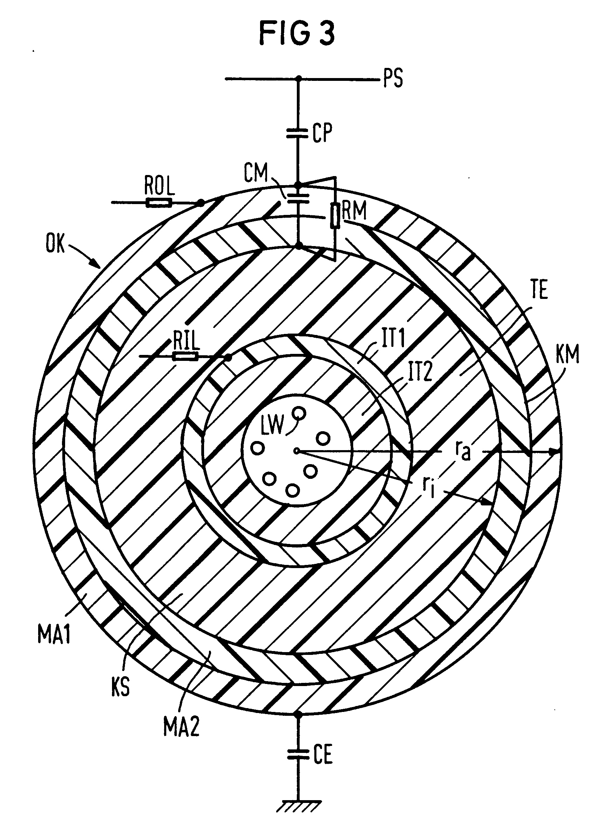

Das Ersatzschaltbild nach Fig. 2 (vgl.auch die in Fig. 3 eingezeichneten Ersatz-Widerstände und -Kapazitäten) wird dann erhalten, wenn sowohl der Kabelmantel als auch die Kabelseele im Sinne der Erfindung schwach elektrisch leitend ausgebildet sind. Neben den zwischen der Oberfläche des Kabelmantels des optischen Kabels OK und dem Phasenleiter PS bestehenden Querkapazitäten CP und den zwischen dem Kabel und der Erde ED bestehenden Querkapazitäten CE tritt noch eine weitere Kapazität CM auf, welche sich zwischen der Oberfläche des Kabelmantels KM (in Fig. 3 zweischichtig ausgebildet und mit MA1, MA2 bezeichnet) und der Kabelseele KS aufbaut. Dabei ist zu berücksichtigen, daß diese Mantelkapazität CM über hundertmal größer ist als die Teilkapazitäten CP und CE. Dies hat seine Ursache in dem gedrängten mechanischen Aufbau des optischen Kabels OK. Die Oberflächenwiderstände ROL, welche durch den Grad der Verschmutzung und Befeuchtung des Außenmantels MA gegeben sind, weden erfindungsgemäß durch die inneren Längswiderstände RIL der schwach leitenden Kabelseele KS potentialgesteuert. Die in ihrer Größe jeweils von dem äußeren Zustand des Kabelmantels KM abhängigen äußeren Längswiderstände ROL (Oberflächenwiderstände) werden zwar nicht völlig wirkungslos. Sie verlieren aber umsomehr an Wirkung, je größer die Mantelkapazität CM ist und je kleiner der zugehörige Ableitwiderstand RM. Dieser Widerstand RM liegt zwischen der Oberfläche des Kabelmantels KM (symbolisiert durch die Längswiderstände ROL) und der Kabelseele KS (symbolisiert durch die Längswiderstände RIL). Wie sich aus Fig. 3 ergibt, ist RM der Quer-Widerstand der Zylinderanordnung der Mantel-Außenoberfläche und der Mantel-Innenoberfläche. Somit gilt:

$$RM = (2 \cdot \pi \cdot 1)^{-1} \cdot \varrho \cdot \ln \frac{r_a}{r_i}$$

Dabei ist $r_a$ der Außenradius und $r_i$ der Innenradius des Mantels KM.

Rechenbeispiel:     Mantel KM innen: 10 mm Ø

Mantel KM außen: 12 mm Ø

Material-DK ($\epsilon_r$): 3

spezifischer Widerstand: $\rho = 10^{12} \; \Omega$ cm

$$CM = \frac{2 \cdot \pi \cdot 8,86 \cdot 10^{-14} \cdot 3 \cdot 100}{\ln \frac{12}{10}} \cdot \left[ \frac{As}{Vcm} \cdot \frac{cm}{m} = \frac{F}{m} \right]$$

$$= 9,2 \cdot 10^{-10} \; \left[ F/m \right] = 920 \; \left[ pF/m \right]$$

CE liegt für übliche Maßkonstruktionen nur in der Größenordnung von etwa 5pF/m

$$\frac{1}{\omega \cdot CM} = 3,5 \cdot 10^6 \; \left[ \Omega \cdot m \right]$$

$$RM = \frac{\varrho}{2 \cdot \pi \cdot 1} \cdot \ln \frac{r_a}{r_i} = \frac{10^{12}}{2 \cdot \pi \cdot 100} \cdot \ln 1,2 \quad \left[ \Omega \cdot m \right]$$

$$= 2,9 \cdot 10^8 \; \left[ \Omega \cdot m \right]$$

Man sieht, daß der Mantel KM sehr niederohmig werden muß; um zum Gesamtquerleitwert nennenswert beizutragen. $\rho = 10^{10} \; \Omega \cdot$ cm ist aber allenfalls von einer mit Feuchtigkeit gesättigten FRNC ("fire resistant, non corrosive")-Mischung zu erreichen. Insofern ist die Leitfähigkeit des Mantels von untergeordneter Bedeutung.

Der Querwiderstand RM wird umso kleiner, je dünner der Mantel KM und je niedriger der spezifische Isolationswiderstand des Mantels KM ist. Der komplexe Querleitwert des Mantels KM ist G $= \frac{1}{RM} + j \cdot \omega \cdot$ CM. Entscheidend ist immer die gemeinsame Wirkung von Kapazität und Isolationswiderstand.

Während die bisherige Auffassung bezüglich volldielektrischer Kabel im Bereich von Höchstspannungsleitungen dahin ging, möglichst hoch isolierende Kabelmaterialien für den Kabelmantel und die Kabelseele zu verwenden, geht die Erfindung von der Erkenntnis aus, daß das Isolationsvermögen zumindest der Kabelseele dem der Oberfläche angepaßt werden sollte, wobei eben zu berücksichtigen ist, daß infolge der Verschmutzung und Befeuchtung der Oberfläche es zu einer Erniedrigung von deren Isolationswert kommt.

Auf diese Weise wird das Erdpotential zwar auch bei trockener Oberfläche vom Mast vorgetragen, weil der Leitwert der Kabelseele KS sich nur langsam der sich ändernden Luftfeuchte anpaßt. Doch entsteht daraus dem Mantel MA in seiner Funktion kein Schaden. Die Kabelseele KS muß jetzt nur zusammen mit dem Mantel geerdet werden. Es fließt dann ständig ein Strom (von unter 1 mA) über das Kabel zur Erde, doch ist dies ein in seiner Wirkung durch die Erdung leicht zu bekämpfender Effekt. Andernfalls könnte bei Berührung der Kabelseele KS auch unter oder hinter dem Mast Schockwirkung (aber keine Gefährdung) auftreten.

Solange nur die Kabeloberfläche leitet, ist mit Abtrocknung derselben kein Effekt mehr vorhanden. Wenn nun die Kabelseele KS leitet, bleibt ein Erdstrom auch nach Abtrocknen der Manteloberfläche bestehen.

Es ist also zweckmäßig, Seelen- und Mantelmaterialien zu verwenden, die einen mäßigen Isolations-Widerstand aufweisen. Dabei ist es besonders vorteilhaft, wenn dieser Widerstand zusätzlich durch eine Feuchteaufnahme erniedrigt wird. Diese Erniedrigung ist deswegen zweckmäßig, weil am Anfang, (d.h. bei noch nicht verschmutztem Kabel) die Mantel-Längswiderstände ROL doch noch relativ hoch sind, wodurch ebenfalls relativ hohe Seelen-Längswiderstände RIL zulässig sind. Erst im Laufe der Verschmutzung werden die Mantel-Längswiderstände ROL niederohmiger, wobei gleichzeitig infolge von diffundierender Feuchtigkeitsanteilen durch den Kabelmantel auch im Inneren infolge der Feuchteaufnahme die Seelen-Längswiderstände RIL ebenfalls niederohmiger werden.

Im Rahmen der Erfindung sind als dichtgepackte Seelenmaterialien insbesondere vorteilhaft:

Hochfeste Kunststoff-Filamente mit ionogener Oberfläche
Hochfeste Glas-Filamente mit ionogener Oberfläche
Mischungen aus beiden.

Mit ionogener Schlichte versehene Kunststoff- oder Glasfilamente, die von sich aus ungenügend ionogen sind.

Mit Quellpulver oder ionogener Schlichte angereicherte Filamente verschiedenster Art.

Kunststoffilamente können aus Polyamid, Polyester, Polykarbonat usw. hersgestellt sein, Glasfilamente aus E-oder S-Glas.

Bei all diesen Materialien sollen zweckmäßig die resultierenden "Isolations"-Widerstände feuchteabhängig ($10^5$ bis $10^{10}$ Ω cm je nach Feuchteaufnahme) sein, um eine automatische, allerdings entsprechend verzögerte Anpassung an klimatische Bedingungen zu erreichen. Dadurch ist sichergestellt, daß z.B. ein in Wüstenklima verlegtes optisches Kabel keine Schäden durch Teilentladungen erfährt, weil hier außen keine Feuchtigkeitsniederschläge auftreten und keine Verschmutzung (also die ROL-Werte nach Figur 2 hoch bleiben) als auch im Inneren keine Widerstandserhöhung auftritt (weil dort die RIL-Werte durch die fehlende Feuchtigkeit nicht absinken). Die resultierenden Kabellängswiderstände ROL liegen dann zwischen $10^7$ und $10^{12}$ Ω/m.

Als Mantelmaterialien ROL sind besonders vorteilhaft:

Für den Innenmantel (MA2):

Polyamide,
Polyurethane,
PVC (stark mit Kaolin/Kreide/Talkum gefüllt)

Für den Außenmantel:

Kriechstromfeste Mischungen
(z.B. EVA, Aluminium-Oxi-Hydrat-Pulver Füllung)
Alle diese Stoffe besitzen spezifische Isolationswiderstände < $10^{12}$ Ω cm und DK ($\epsilon r$) - Werte > 3
Nicht geeignet als Mantelmaterialien sind dagegen Polyolefine, weil ihr Isolationswiderstand sehr groß und ihr DK ($\epsilon r$)-Wert besonders klein ist.

Da aber die Mantelaußenfläche immer kriechstromresistent sein muß, um Restladungen zu ertragen, sind alle feuchteaufnehmenden Materialien (im Bereich der Kabelseele) zweckmäßig mit einer ebenfalls feuchteabhängigen Kriechstromaußenhülle zu versehen. In diesem Zusammenhang kann zweckmäßig im Bereich der Außenhülle Aluminium-Hydroxid dem Mantelmaterial zugemischt werden und zwar vorteilhaft im Bereich zwischen 10 und 60 Gewichtsprozent. Schichtungen aus Polyamiden oder Polyurethanen mit einem solchen mit Aluminium-Hydroxid versetzten Mantel sind mechanisch und elektrisch besonders zuverlässig.

Kritisch kann bei dem erfindungsgemäßen Kabel der Erdungsbereich werden, d.h. derjenige Bereich, in dem das Kabel z.B. im Bereich der Traverse (vgl. auch TR in Fig. 1) an geerdeten Teilen angelascht wird.

Da hier der gesamte Erdstrom über die in Fig. 2 mit CS bezichnete Kapazität der Abspannspirale AS abfließen würde, ist es zweckmäßig, in diesem Bereich einen Ableitwiderstand RS vorzusehen, der möglichst niederohmig ist. Um dies zu erreichen sind besonders Erdungsmaßnahmen auch im Bereich der Seele vorteilhaft, d.h. der Mantel wird abgesetzt und im Bereich der Seele werden Erdungsmaßnahmen vorgesehen, beispielsweise durch entsprechende leitende Schellen, Drahtbewicklungen o. dgl.. Die gleichen Überlegungen gelten auch für das Kabelende, wo ebenfalls zweckmäßig eine Erdung am Mast vorzunehmen ist. Obgleich die zu erwartenden Ströme kleiner I mA sind, werden damit Schockwirkungen auf Personen völlig ausgeschlossen.

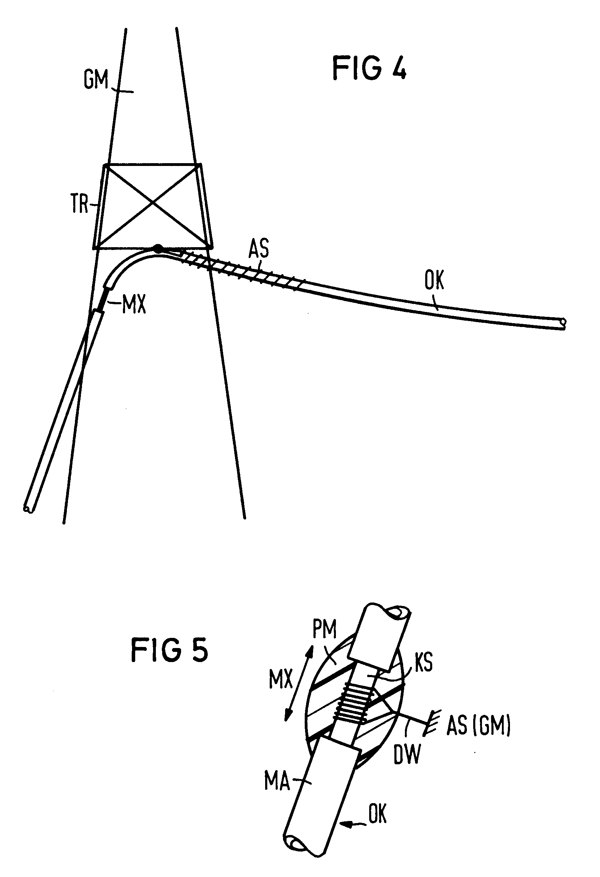

Fig. 4 zeigt Einzelheiten der Erdung der Kabelseele (während der Montage) im Bereich des Gittermastes GM. Beim optischen Kabel OK wird in einem Teilabschnitt MX der Mantel MA abgesetzt (vgl. vergrößerte Darstellung in Fig. 5) und die freigelegte Kabelseele KS mit einem aufgewickelten Metalldraht DW (oder einer Schelle) gefaßt und leitend mit der Abspannung (Abspannspirale) AS und/oder dem Gittermast GM verbunden. Anschließend wird die Absetzstelle mit einer Dichtmasse PM wieder verschlossen, um die Längswasserdichtigkeit des Kabels zu erhalten. Dabei ist zu beachten, daß entgegen der vereinfachten Darstellung von Fig.3 die im doppelwandigen Innenrohr IT1, IT2 untergebrachten Lichtwellenleiter LW normalerweise in einer die Längswasserdichtigkeit ergebenden Füllmasse eingelagert sind.

## Patentansprüche

1. Metallfreies aus Kabelseele und Kabelmantel bestehendes selbsttragendes optisches Kabel (OK) für die Verwendung als Luftkabel im Feldbereich zwischen den Phasenseilen (PS) einer Hochspannungsfreileitung (HF), **dadurch gekennzeichnet,** daß die Kabelseele (KS) schwach elektrisch leitend ausgebildet ist, derart, daß deren spezifischer Widerstand zwischen $10^5$ $\Omega$ $\cdot$ cm und $10^{10}$ $\Omega$ $\cdot$ cm liegt.

2. Optisches Kabel nach Anspruch I, **dadurch gekennzeichnet,** daß der Kabelmantel (KM) schwach elektrisch leitend ausgebildet ist,derart daß deren spezifische Widerstand zwischen $10^7$ $\Omega$ $\cdot$ cm und $10^{12}$ $\Omega$ $\cdot$ cm liegt.

3. Optisches Kabel nch einem der vorhergehenden Ansprüche, **dadurch gekennzeichnet,** daß der Isolationswiderstand des gesamten optischen Kabels (OK) zwischen $10^{12}$ $\Omega$/m und $10^7$ $\Omega$/m liegt.

4. Optisches Kabel nach einem der vorhergehenden Ansprüche, **dadurch gekennzeichnet,** daß die Kabelseele (KS) und der Kabelmantel (KM) aus feuchteaufnehmenden Materialien bestehen.

5. Optisches Kabel nach Anspruch 4, **dadurch gekennzeichnet,** daß der Kabelmantel (KM) und die Kabelseele (KS) einen Zusatz von Aluminiumhydroxid aufweisen.

6. Optisches Kabel nach Anspruch 5, **dadurch gekennzeichnet,** daß der Zusatz zwischen 10 und 60 Gewichtsprozent beträgt.

7. Optisches Kabel nach einem der vorhergehenden Ansprüche, **dadurch gekennzeichnet,** daß Erdungseinrichtungen vorgesehen sind, die beim verlegten Kabel (OK) sowohl den Kabelmantel (KM) als auch die Kabelseele (KS) auf Erdpotential legen.

8. Optisches kabel nach Anspruch 7,**dadurch gekennzeichnet,** daß der Kabelmantel (KM) zur Anbringung der Erdung seinrichtungen für die Kabelseele (KS) abgesetzt und die Erdungsstelle mit einem Dichtungsmaterial verschlossen ist.

9. Optisches Kabel nach einem der vorhergehenden Ansprüche, **dadurch gekennzeichnet,** daß als Seelenmaterial Kunststoffilamente, gegebenenfalls mit Glasgarnen gemischt, vorgesehen sind.

10. Optisches Kabel nach einem der vorhergehenden Ansprüche, **dadurch gekennzeichnet,** daß als Seelenmaterial Polyamidfilamente gegebenenfalls mit Glasgarnen gemischt, vorgesehen sind.

11. Optisches Kabel nach einem der vorhergehenden Ansprüche, **dadurch gekennzeichnet,** daß als Seelenmaterial mit ionogener Schlichte versehene Polyester- oder Glasfilamente vorgesehen sind.

12. Optisches Kabel nach einem der vorhergehenden Ansprüche, **dadurch gekennzeichnet,** daß als Seelenmaterial mit Quellpulvern oder Aluminium-Hydroxid oder ionogener Schlichte angereicherte Filamente verschiedener Art, auch in Kombination mit Polyamidfilamenten vorgesehen sind.

## Claims

1. Metal-free, self-bearing optical cable (OK) consisting of a cable core and cable sheath, for use as an aerial cable in the field region between the phase wires (PS) of a high-voltage overhead line (HF), characterised in that the cable core (KS) is designed to be weakly electrically conductive in such a way that its resistivity is between $10^5 \,\Omega\cdot cm$ and $10^{10}\,\Omega\cdot cm$.

2. Optical cable according to Claim 1, characterised in that the cable sheath (KM) is designed to be weakly electrically conductive in such a way that the resistivity is between $10^7\,\Omega\cdot cm$ and $10^{12}\,\Omega\cdot cm$.

3. Optical cable according to one of the preceding claims, characterised in that the insulation resistance of the entire optical cable (OK) is between $10^{12}\,\Omega/m$ and $10^7\,\Omega/m$.

4. Optical cable according to one of the preceding claims, characterised in that the cable core (KS) and the cable sheath (KM) consist of moisture-absorbing materials.

5. Optical cable according to Claim 4, characterised in that the cable sheath (KM) and the cable core (KS) have an additive of aluminium hydroxide.

6. Optical cable according to Claim 5, characterised in that the additive is between 10 and 60 per cent by weight.

7. Optical cable according to one of the preceding claims, characterised in that earthing devices are provided which, when the cable (OK) is laid, connect both the cable sheath (KM) and the cable core (KS) to earth potential.

8. Optical cable according to Claim 7, characterised in that the cable sheath (KM) is stripped for the purpose of mounting the earthing devices for the cable core (KS), and the earthing location is sealed with a sealing material.

9. Optical cable according to one of the preceding claims, characterised in that plastic filaments, mixed with glass-fibre yarns, as desired, are provided as the core material.

10. Optical cable according to one of the preceding claims, characterised in that polyamide filaments, mixed with glass-fibre yarns, as desired, are provided as the core material.

11. Optical cable according to one of the preceding claims, characterised in that polyester filaments or glass filaments provided with an ionogenic slip are provided as the core material.

12. Optical cable according to one of the preceding claims, characterised in that filaments of various types enriched with swelling powders or aluminium hydroxide or ionogenic slips, also in combination with polyamide filaments, are provided as the core material.

## Revendications

1. Câble optique autoportant (OK) exempt de métal, constitué par une âme et une gaine et destiné à être utilisé en tant que câble aérien à la campagne entre les conducteurs de phase (PS) d'une ligne aérienne à haute tension (HF), caractérisé par le fait que l'âme (KS) du câble est réalisée de manière à être faiblement conductrice du point de vue électrique de sorte que sa résistance spécifique est comprise entre 15 $\Omega.cm$ et $10^{10}$ $\Omega.cm$.

2. Câble optique suivant la revendication 1, caractérisé par le fait que la gaine (KM) du câble est agencée de manière à être faiblement conductrice du point de vue électrique de sorte que sa résistance spécifique est comprise entre $10^7$ $\Omega.cm$ et $10^{12}$ $\Omega.cm$.

3. Câble optique suivant l'une des revendications précédentes, caractérisé par le fait que la résistance d'isolement de l'ensemble du câble optique (OK) est comprise entre $10^{12}$ Ω/m et $10^7$ Ω/m.

4. Câble optique suivant l'une des revendications précédentes, caractérisé par le fait que l'âme (KS) et la gaine (KM) du câble sont réalisées en des matériaux absorbant l'humidité.

5. Câble optique suivant la revendication 4, caractérisé par le fait que la gaine (KM) et l'âme (KS) du câble contiennent un additif formé d'hydroxyde d'aluminium.

6. Câble optique suivant la revendication 5, caractérisé par le fait que l'additif est compris entre 10 et 60 pour cent en poids.

7. Câble optique suivant l'une des revendications précédentes, caractérisé par le fait qu'il est prévu des dispositifs de raccordement à la terre qui, lorsque le câble (OK) est posé, placent au potentiel de terre aussi bien la gaine (KM) que l'âme (KS) du câble.

8. Câble optique suivant la revendication 7, caractérisé par le fait que, pour le montage des dispositifs de raccordement à la terre pour l'âme (KS) du câble, la gaine (KM) du câble est étagée et que le point de raccordement à la terre est fermé au moyen d'un matériau d'étanchéité.

9. Câble optique suivant l'une des revendications précédentes, caractérisé par le fait qu'il est prévu, comme matériau pour l'âme, des filaments en matière plastique, éventuellement mélangés à des fils de verre.

10. Câble optique suivant l'une des revendications précédentes, caractérisé par le fait qu'il est prévu, comme matériaux de l'âme, des filaments de polyamide, éventuellement mélangés à des fils de verre.

11. Câble optique suivant l'une des revendications précédentes, caractérisé par le fait qu'il est prévu, comme matériau de l'âme, des filaments de polyester ou de verre revêtus d'un enduit ionogène.

12. Câble optique suivant l'une des revendications précédentes, caractérisé par le fait qu'il est prévu, comme matériau de l'âme, des filaments de différents types enrichis par des poudres aptes à gonfler ou par de l'hydroxyde d'aluminium ou des revêtements ionogènes, et également en combinaison avec des filaments de polyamide.

# FIG 1

# FIG 2

# FIG 3

FIG 4

FIG 5